# EUROPEAN PATENT SPECIFICATION

(11) **EP 0 885 776 B1**
(45) Date of publication and mention of the grant of the patent: **04.09.2002**
(21) Application number: 97110032.6
(22) Date of filing: 19.06.1997
(51) Int. Cl.: B60R 3/02, B60R 19/48, B60D 1/60

(54) **Footstep bumper**
Stossstange mit Trittstufe
Pare-chocs comportant un marchepied

(43) Date of publication of application: 23.12.1998
(73) Proprietor: VOLVO LASTVAGNAR AB, 405 08 Göteborg (SE)
(72) Inventor: Gollungberg, Peter, 440 60 Skärhamn (SE)
(74) Representative: Harrison, Michael Charles

(56) References cited:
- DE-A- 4 302 868
- DE-U- 8 709 772
- GB-A- 866 178
- US-A- 4 198 070
- US-A- 5 538 265

## Description

### Field of Invention

The invention relates to a cover arrangement for an aperture provided in a portion at the front or rear of a vehicle. In particular, the invention relates to a portion of a vehicle in the form of a bumper, and more particularly to bumpers for vehicles for use on surfaces other than normal asphalt-surfaced roads. Such vehicles may typically be used on building sites for transporting large amounts of sand, gravel, cement, earth or other materials. These vehicles may generally be designated as off-road vehicles.

### Background to the invention

Whilst any vehicle may be used off-road, there are nevertheless special problems encountered off normal roads. Off-road surfaces can be very varied, ranging for example from deep mud to deep sand or rocky terrain. Also the surfaces are generally not level, including unevenness and inclines. Because of these difficulties it has been found necessary to adapt such vehicles to the off-road terrain and to provide them with a range of special equipment. Such adaptation includes arranging a large clearance for the vehicle chassis, providing extra reinforcements and providing special tyres etc.

Despite such special adaptation, off-road vehicles nevertheless can become trapped on difficult terrain. Because of this, it may be necessary for the vehicle to be pulled out of difficulties. This pulling puts a great strain on the point of attachment to the vehicle. It is known therefore to provide pre-placed attachment points for the attachment of tow cables, wires or cords. The vehicle can then be pulled by another vehicle or by a winch. The winch may also be provided on the vehicle itself to allow the vehicle to pull itself out of difficulties. Similarly the off-road vehicle itself may be used to tow other vehicles or objects.

Another problem with off-road vehicles is that access is needed on difficult terrain to various parts of the vehicle. In particular access is needed to the upper parts of the vehicle, possibly to roof attachments or to clean windscreens on high vehicles. To facilitate this access, users have often stood on the vehicle's bumper. These bumpers are however not always designed to take such vertical force and may be damaged. Pre-fitted steps have been provided to alleviate this problem. There are however problems with such steps. One problem is that the space available for such a step is limited. This is particularly so around the bumper, where there may be legal requirements with regards to vehicle license plates etc., which limit the positioning of the step.

One solution to the problem of positioning the step is to place the step just below or above the tow cable attachment point. This arrangement works well on level ground where the tow cable extends approximately parallel to the ground. On off-road terrain however there are some disadvantages. On uneven ground the tow cable may no longer be parallel to the ground, i.e. parallel to the vehicle chassis. The tow cable may extend upwardly or downwardly relative to the vehicle. A step which is placed above or below the attachment point may in these circumstances come in contact with the tow cable. Considerable forces may then be exerted by the cable on the step, sufficient to bend the step or even to break it off. Also the tow cable can rub on the step which could lead to damage to the tow cable and its failure.

GB-A-866 178 describes a vehicle having two steps at the rear which give access to a rear entrance of the vehicle via a pair of doors. The steps may be folded up and covered in part by the doors to secure them in place. Access to the spare wheel may be obtained between the steps. There is no reference to removability.

A further problem with prior art arrangements is that the attachment for the towing cable was left open. This is unsightly and allows the ingress of dirt etc. to the attachment.

The problem to be solved by the invention therefor is to provide a cover arrangement for a portion of a vehicle, such as a vehicle bumper or another part of the vehicle such as the chassis, which has a step, but does not have the disadvantages associated with prior art steps.

This problem is solved by a cover arrangement according to claim 1.

The device according to the invention allows the provision of a cover arrangement for a towing arrangement or other services facility, usable as a step in a space-saving manner without the disadvantage that it can be damaged by a tow cable for example.

Further advantageous embodiments of the invention are set out in the dependent claims.

Non-limiting embodiments of the invention in relation to a vehicle bumper will now be described with reference to the accompanying drawings in which:
- Fig. 1: shows a general view of a vehicle bumper including parts of the invention.
- Fig. 2: shows a close-up view of part of the bumper shown in Fig. 1.
- Fig. 3: shows the bumper with the cover in its open position.
- Fig. 4: shows a cross-section view through the line IV - IV of Fig. 3.
- Fig. 5: shows a larger view of the pivoting arrangement of Fig. 4 including the retaining means for the pivot.
- Fig. 6: shows a view of another embodiment of the bumper attached to a vehicle chassis.

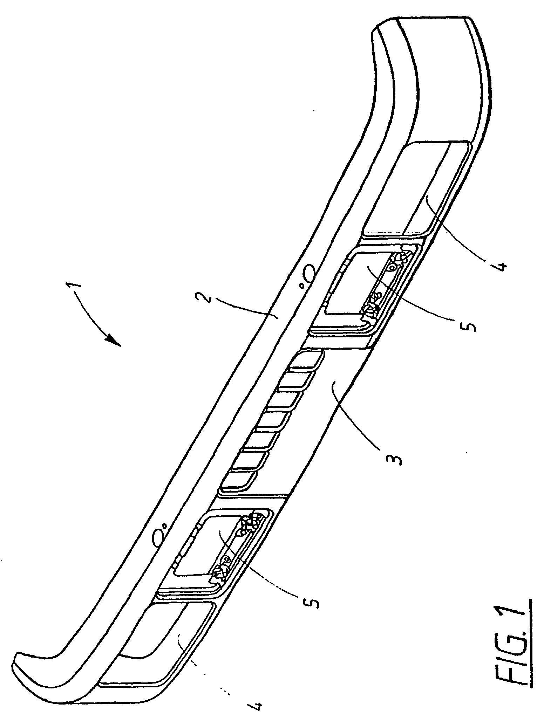

Referring first to Fig. 1 there is shown a bumper 1 with certain parts omitted for clarity. The vehicle portion 2, in this case a part of the bumper 1 is formed by an elongate protector which functions to protect the vehicle, to which it can be attached, from impacts for instance, or from objects or other vehicles. The protector can have many different shapes depending upon the area of the vehicle to be protected and the shape of the vehicle. The protector may be curved at its ends in order to protect part of the side of the vehicle. The bumper 1 may be attached to either the front or the rear of the vehicle, or both. The protector in the embodiment shown has an area 3 for the attachment of a vehicle license plate. The shape and size of this area may vary, though commonly it has a rectangular shape. The protector is further provided with at least one, though usually two, apertures or spaces 4 for the fitting of vehicle lights. Lights are however not always required in the bumper of course, although with large off-road vehicles having high a chassis this is often the most suitable location. The protector also has at least one aperture 5, though two are shown in the figure. The apertures 5 may be positioned between the area 3 for the vehicle license plate and the spaces 4 (if present) for the vehicle lights, as shown, or alternatively positioned at any other suitable location in the protector. The bumper 1 is commonly formed of steel although high density plastics material or other suitable materials could be used.

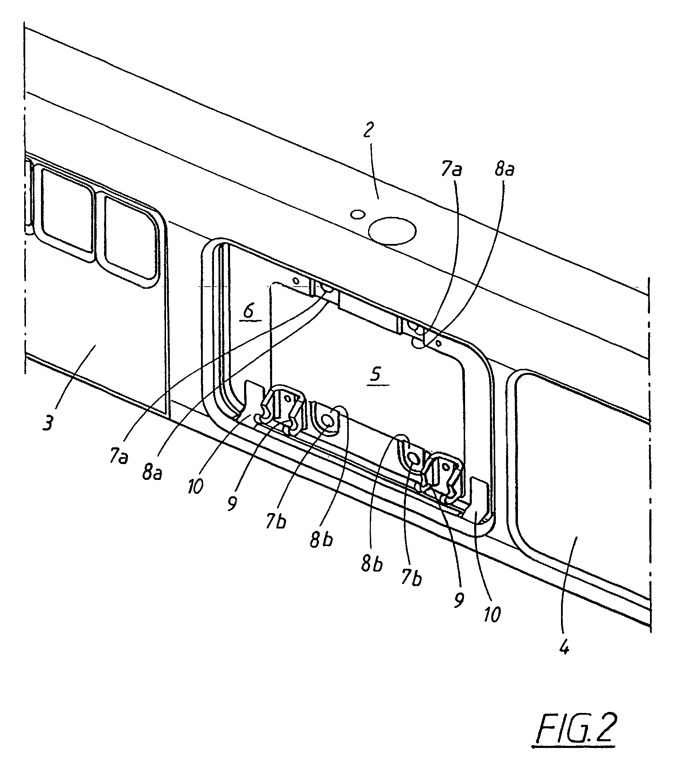

Fig. 2 allows the aperture 5 to be seen in more detail. The aperture 5 is formed in a plate 6. The plate may be formed in one-piece with the elongate protector, or may be integrally attached thereto. The plate is preferably set back relative to the front surface of the bumper 1, or other vehicle portion, to form a recess for a purpose which will become clear below. In the upper part of the plate 6 one or more upper bolt apertures 7a are shown located in recessed upper surfaces 8a of said plate. Correspondingly in the lower part of the plate 6, one or more lower bolt apertures 7b are shown located in recessed lower surfaces 8b. The bolt apertures 7a, 7b serve to allow the passage of bolts 20 for attachment to the chassis 16 of the vehicle. A pair of support members, in this instance in the form brackets 9, are also fixed to the plate 6. The brackets 9 may be attached to the plate 6 by any suitable means including bolts, rivets, welding etc. These brackets 9 form one part of a guiding means, in this case a pivotal connection as will be seen below. On either side of the brackets 9 there is provided an area 10 which has the form of a recess or aperture and whose function will become apparent below.

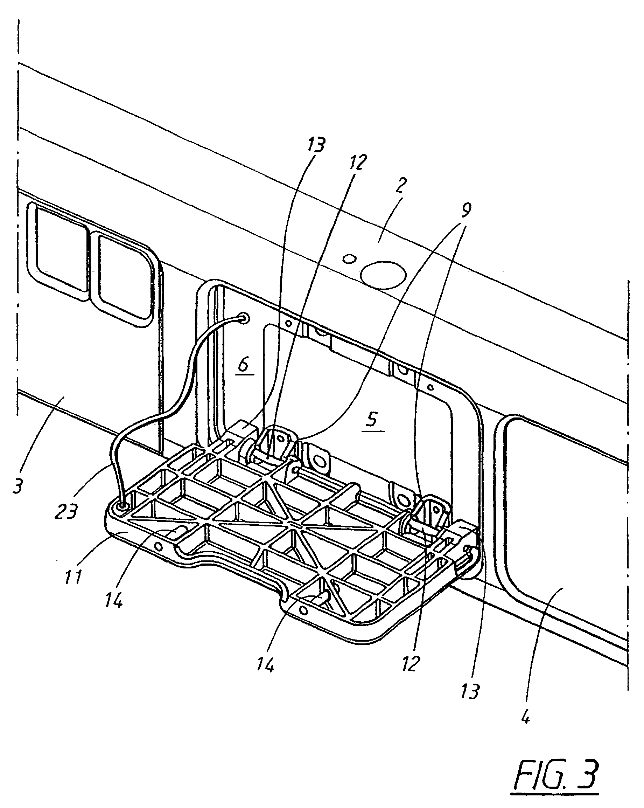

Fig. 3 shows a cover 11 connected to the brackets 9. The cover has a pair of pivot pins 12, which form another part of the guiding means, the pins 12 fitting into respective complementary slots 9b formed in the brackets 9 to allow relative pivotal movement between the cover 11 and the protector, or more generally speaking a guided movement of the cover 11 along a predetermined path. The cover can be moved to a first, closed position, not shown, in which it fits into the recess formed by the plate 6. In this position, the outer surface of the cover 11 will be approximately flush with the front surface of the bumper. In a second, open position of the cover 11, as shown in Fig. 3, the cover is substantially perpendicular to the front surface of the bumper. This means that when fitted to a vehicle standing on level ground the cover 11 will extend approximately parallel to the ground (or in other words parallel to the horizontal plane of the vehicle to which the bumper is to be attached). The cover may however in the second position extend out at any angle greater than about 45 degrees. In the second position, the cover 11 can function as a step to allow a user access to upper parts of the vehicle. The cover 11 can be made from any suitable material including high density plastics or metal, e.g. steel, but the most preferred material is aluminium (e.g. in the form of a casting). The cover 11 may be suitably reinforced. The reinforcement may be by ribbing, as shown, or for example by inserts of stronger material. The upper surface of the cover 11 as seen in the second open position may be provided with high friction material to reduce the likelihood of a user slipping on the cover when used as a step.

The cover 11 is provided with a pair of abutment extensions 13, though any number are possible. The extensions serve to prevent further movement of the cover 11 away from the first position when the cover is in the second position. As the cover is pivoted to the second position, these extensions extend into the areas 10. The extensions may abut against the edges of the plate 6 in the case that the areas 10 have the form of apertures, and thus support the cover 11 against the pivotal force exerted by the presence of a user on the step. Alternatively when the areas 10 are formed by recesses the extensions 13 may abut against the bottom and/or sides of the respective recesses. A pair of pins 14 are provided in the cover 11 which can be received in clips provided on plate 6, as will be seen later, so as to retain the cover 11 in the first closed position.

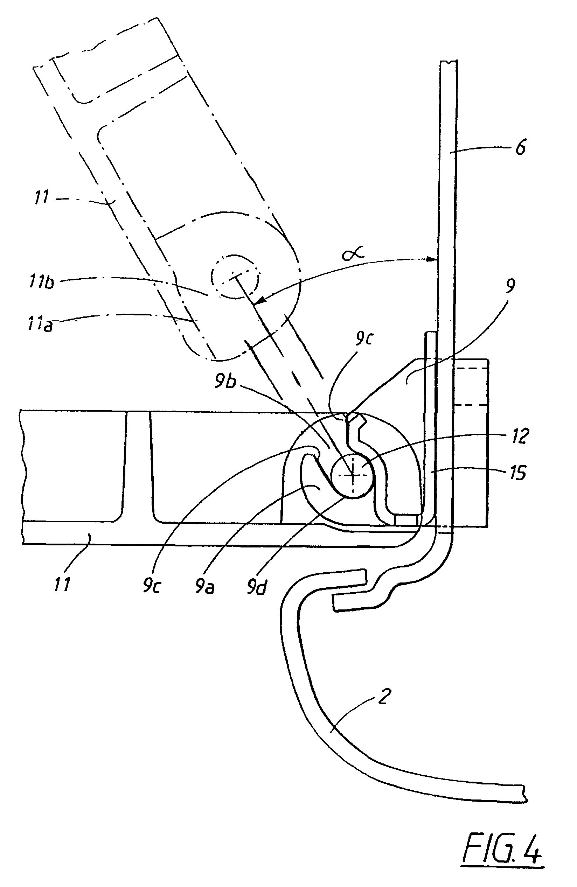

The pivoting of the cover 11 and its removal is best seen in Fig. 4. The bracket 9 includes a hook shaped portion 9a forming a slot 9b. The slot 9b has two parallel sides 9c joined by a curved portion 9d at one end so that the pivot pin 12 may be inserted into the slot and abut the curved portion 9d which forms a bearing for the pivot pin. The parallel sides are set at an angle relative to the plate 6. The removal of the pivot pin is not however possible at all angles of the cover 11 relative to the surface of the elongate protector. An abutment surface 11a forms a passage with the pivot pin. The hook shaped portion 9a passes through this passage 11b. The presence of the abutment surface 11a and the particular inclination of the parallel sides 9c of the slot 9b in the hook shaped portion limits the angle or angles at which the pivot pin can be removed. When the hook shaped portion 9a and abutment 11a have the form as illustrated, the pivot pin 12 can be removed when the abutment surface 11a is approximately parallel to the sides 9c of the slot 9b. This angle α is preferably between 20 and 40 degrees, more preferably between 25 and 35 degrees, and most preferably 30 degrees. Arrangements of abutment surfaces and/or slot sides other than those illustrated are possible to achieve the effect of limiting the removal of the pivot pin to an intermediate position between the first and second positions or to an intermediate position comprising a certain range of angles or to a particular angle. Most preferably the cover is only removable at one single predetermined angle or one very small range of angles (e.g. over an angular range of a few degrees, e.g. 3 to 5 degrees).

The pivot pin 12 is releasably held in the bracket 9 by a retaining means which in this instance is in the form of a retaining clip 15. The clip is formed from resilient metal or plastics and is attached to the bracket 9 and/or plate 6. The clip exerts a resilient retaining force on the pivot pin 12 when the pin is positioned in the bracket 9. With the exertion of sufficient force on the pin however, in the appropriate angular position or angular range, the retaining force can be overcome to remove the pivot pin 12. Although the clip as illustrated is particularly useful, other retaining means are possible, both other forms of clips and means other than clips.

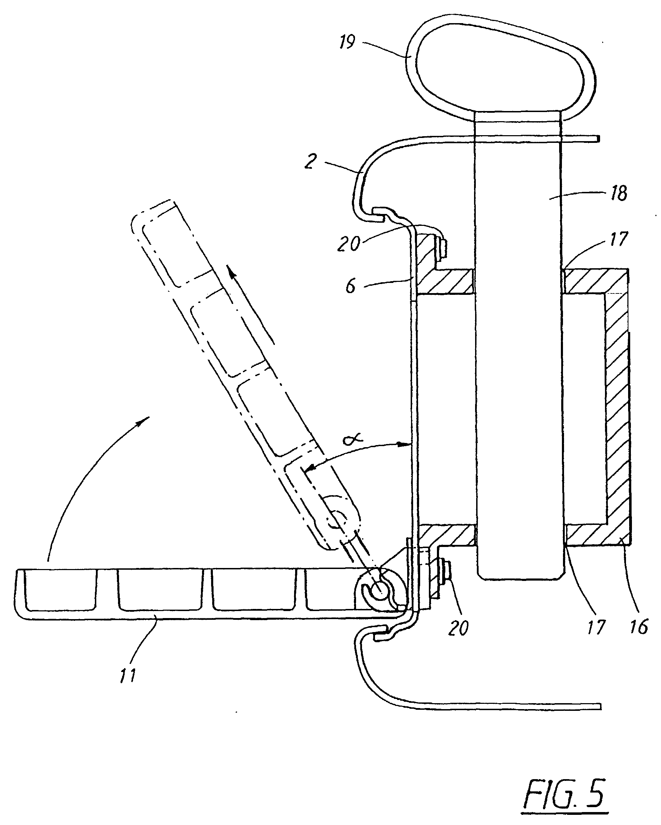

The attachment of the tow cable is shown in Fig. 5. A bracket 16 is fixed to the chassis by any means, e.g. welding. The bracket is however preferably part of the chassis itself. Two aligned holes 17 are provided in the bracket 16. A pin 18 for attachment of the towing cable is fixedly or removably placed in the holes 17. The pin 18 has a handle 19 to facilitate its removal when required. The pin 18 may be removed for example so that it may be reinserted through a loop in the end of the tow cable. The plate 6 is fixed to the bracket 16 by bolts 20 which pass through the bolt apertures 7a, 7b. However, other means for fixing the plate such as welding etc. may be employed.

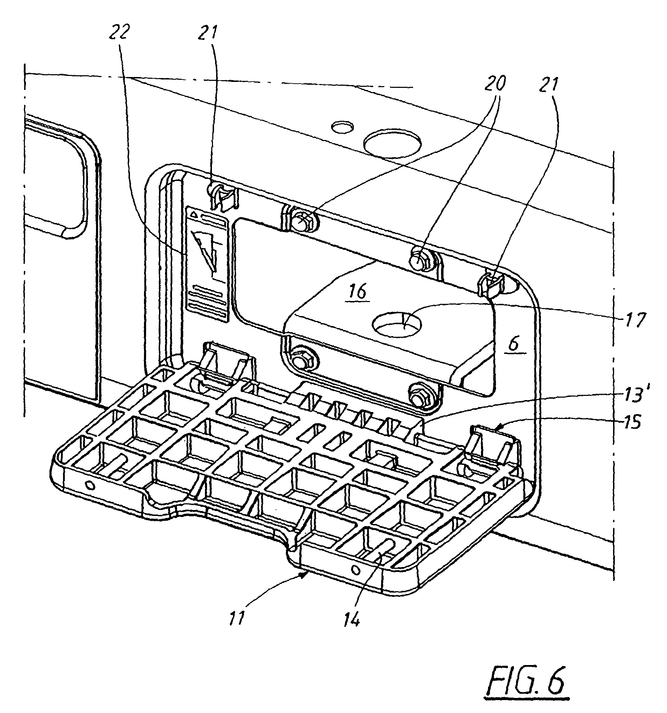

Fig. 6 shows a modified embodiment of the invention. In this modification the pair of extensions 13 are replaced by a single central extension 13' which enters into a single central recessed or apertured area 10, not visible, in the plate 6. The strengthening ribs for the cover plate are provided in a differing pattern and still further patterns may also be envisaged. Releasable means, in this case clips 21, are provided for cooperating with pins 14 to retain the cover in the first closed position. Instead of clips, a magnetic means or other releasable fastening could be used. These releasable means could of course also be provided in the first embodiment. An informative display 22 is provided which illustrates to the user how the device is used. Such a display 22 may of course also have been provided in the first embodiment.

The invention is not of course limited to the preceding embodiments. So, for instance, although the embodiments show pivot pins carried by the cover and brackets carried by the plate, the inverse is also possible. Additionally, although a pivoting arrangement has been described, other less preferable forms of guided movement are also imaginable. It can also be arranged for the cover plate to be moved in some other manner between the first closed position and the second open position. One such alternative arrangement could include a linkage connection which also moves the cover to a position perpendicular to the plate. A lazy tongs type of linkage modified to also produce an angular movement of the cover could for example be employed.

The cover arrangement of the invention may also be used for covering arrangements other than towing arrangements, such as service facilities (e.g. oil refill points or windscreen washer fluid refill points for example).

Additionally, the cover may be provided with means preventing loss of the cover 11 when it is temporarily removed from the guiding means. Such means may be in the form of a wire 23 for example (see Fig. 3), connected to the vehicle or part thereof, and also connected to the cover plate.

## Claims

1. A cover arrangement comprising a cover (11) for an aperture (5) in a portion (2) at the front or rear of a vehicle, said aperture (5) being formed for allowing access to a towing arrangement or a service facility, and said cover (11) being movable along a path predetermined by guiding means between a first position in which the cover (11) substantially covers the aperture (5), and a second position, in which it is usable as a step, **characterized in that** means (9, 12) are provided for allowing removal of the cover (11) from said guiding means when said cover is in an intermediate position between said first and said second position.

2. A cover arrangement according to claim 1, **characterized in that** the movement between said first and second positions includes a pivoting movement.

3. A cover arrangement according to claim 1 or claim 2, **characterized in that** the cover (11), when in its second position, is substantially parallel to the horizontal plane of a vehicle or to the horizontal plane of a vehicle to which said vehicle portion (2) is to be attached.

4. A cover arrangement according to any preceding claim, **characterized in that** said vehicle portion (2) at the front or rear of the vehicle is a vehicle bumper (1).

5. A cover arrangement according to any preceding claim, **characterized in that** said cover (11) and said vehicle portion (2) are provided with cooperating retaining means (14, 21) for releasably maintaining the cover in the first position.

6. A cover arrangement according to any preceding claim, **characterized in that** the guide means is formed by one of said cover (11) and said vehicle portion (2) having a pivot pin (12), and the other of said cover (11) and said vehicle portion (2) having a support member (9) which can cooperate with the pivot pin (12) to allow a guided pivoting movement.

7. A cover arrangement according to claim 6, **characterized in that** the support member (9) is open at one side in the form of a slot to allow removal of the pivot pin (12) from the slot in a direction generally perpendicular to the axis of the pin.

8. A cover arrangement according to either of claims 6 or 7, **characterized in that** the cover (11) and the vehicle portion (2) has means (11a) allowing removal of the pivot pin only when the cover and protector are within a predetermined angular position.

9. A cover arrangement according to any preceding claim, **characterized in that** the cover (11) is attached to the vehicle portion (2) by means preventing loss of said cover when said cover is removed from said guiding means.

10. A cover arrangement according to any preceding claim, **characterized in that** one of the vehicle portion (2) and the cover (11) comprises means (13, 13') which prevent further movement of the cover (11) away from the first position when the cover (11) is in the second position.

11. A cover arrangement according to any preceding claim, **characterized in that** releasable means (15) are provided for releasably retaining the cover (11) in connection with the vehicle portion (2), said releasable means including a resilient member for holding the cover (11) in place and against whose resilience a predetermined force must be exerted in order to remove the cover (11).

## Patentansprüche

1. Abdeckanordnung mit einer Abdeckung (11) für eine Öffnung (5) in einem Bereich (2) vorne oder hinten an einem Fahrzeug, wobei die Öffnung (5) ausgeformt ist, um Zugang zu einer Zuganordnung oder einer Serviceeinrichtung zu ermöglichen, und wobei die Abdeckung (11) beweglich ist entlang einer Bahn, die vorbestimmt ist durch Führungsmittel, zwischen einer ersten Stellung, in welcher die Abdeckung (11) im Wesentlichen die Öffnung (5) abdeckt, und einer zweiten Stellung, in welcher sie als Stufe verwendbar ist, **dadurch gekennzeichnet, dass** Mittel (9, 12) vorgesehen sind zum Ermöglichen des Entfernens der Abdeckung (11) von den Führungsmitteln, wenn die Abdeckung sich in einer Zwischenstellung zwischen der ersten und der zweiten Stellung befindet.

2. Abdeckanordnung nach Anspruch 1, **dadurch gekennzeichnet, dass** die Bewegung zwischen der ersten und der zweiten Stellung eine Schwenkbewegung beinhaltet.

3. Abdeckanordnung nach Anspruch 1 oder 2, **dadurch gekennzeichnet, dass** die Abdeckung (11), wenn sie in der zweiten Stellung ist, im Wesentlichen parallel zur horizontalen Ebene eines Fahrzeugs liegt oder zur horizontalen Ebene eines Fahrzeugs, an welchem der Fahrzeugbereich (2) angebracht werden soll.

4. Abdeckanordnung nach einem der vorangehenden Ansprüche, **dadurch gekennzeichnet, dass** der Fahrzeugbereich (2) an der Vorder- oder Rückseite des Fahrzeugs eine Fahrzeugstoßstange (1) ist.

5. Abdeckanordnung nach einem der vorangehenden Ansprüche, **dadurch gekennzeichnet, dass** die Abdeckung (11) und der Fahrzeugbereich (2) mit zusammenwirkenden Rückhaltemitteln (14, 21) versehen sind, um die Abdeckung lösbar in der ersten Stellung zu halten.

6. Abdeckanordnung nach einem der vorangehenden Ansprüche, **dadurch gekennzeichnet, dass** das Führungsmittel dadurch ausgebildet ist, dass entweder die Abdeckung (11) oder der Fahrzeugbereich (2) einen Drehstift (12) aufweist und dass das andere Element ein Lagerelement (9) aufweist, welches mit dem Drehstift (12) zusammenarbeiten kann, um eine geführte Schwenkbewegung zu ermöglichen.

7. Abdeckanordnung nach Anspruch 6, **dadurch gekennzeichnet, dass** das Lagerelement (9) an einer Seite in Form eines Schlitzes geöffnet ist, um ein Entfernen des Drehstifts (12) aus dem Schlitz in einer Richtung im Allgemeinen senkrecht zur Achse des Stifts zu ermöglichen.

8. Abdeckanordnung nach einem der Ansprüche 6 oder 7, **dadurch gekennzeichnet, dass** die Abdeckung (11) und der Fahrzeugbereich (2) Mittel (11a) aufweisen, welche das Entfernen des Drehstifts nur dann ermöglichen, wenn die Abdeckung und der Protektor sich in einer vorbestimmten Winkelposition befinden.

9. Abdeckanordnung nach einem der vorangehenden Ansprüche, **dadurch gekennzeichnet, dass** die Abdeckung (11) an dem Fahrzeugbereich (2) durch Mittel angebracht ist, welche den Verlust der Abdeckung verhindern, wenn die Abdeckung von den Führungsmitteln entfernt wird.

10. Abdeckanordnung nach einem der vorangehenden Ansprüche, **dadurch gekennzeichnet, dass** entweder der Fahrzeugbereich (2) oder die Abdeckung (11) Mittel (13, 13') aufweist, welche eine weitere Bewegung der Abdeckung (11) weg aus der ersten Stellung verhindern, wenn die Abdeckung (11) sich in der zweiten Stellung befindet.

11. Abdeckanordnung nach einem der vorangehenden Ansprüche, **dadurch gekennzeichnet, dass** lösbare Mittel (15) vorgesehen sind, um die Abdeckung (11) lösbar in Verbindung mit dem Fahrzeugbereich (2) zu halten, wobei die lösbaren Mittel ein elastisches Element beinhalten zum Halten der Abdeckung (11) an ihrer Stelle und gegen dessen Spannkraft eine vorbestimmte Kraft aufgebracht werden muss, um die Abdeckung (11) zu entfernen.

## Revendications

1. Agencement de couvercle comprenant un couvercle (11) pour une ouverture (5) se trouvant dans une partie (2) à l'avant ou à l'arrière d'un véhicule, ladite ouverture (5) étant formée de façon à permettre l'accès à un dispositif de remorquage ou à un équipement de service, et ledit couvercle (11) étant mobile, le long d'un chemin préétabli, à l'aide d'un moyen de guidage entre une première position dans laquelle le couvercle (11) recouvre sensiblement l'ouverture (5), et une seconde position dans laquelle il peut être utilisé comme marchepied, **caractérisé en ce que** des moyens (9, 12) sont prévus pour permettre le retrait du couvercle (11) dudit moyen de guidage quand ledit couvercle est dans une position intermédiaire entre ladite première position et ladite seconde position.

2. Agencement de couvercle selon la revendication 1, **caractérisé en ce que** le mouvement entre lesdites première et seconde positions comprend un mouvement pivotant.

3. Agencement de couvercle selon la revendication 1 ou 2, **caractérisé en ce que** le couvercle (11), dans sa seconde position, est sensiblement parallèle au plan horizontal d'un véhicule ou au plan horizontal d'un véhicule auquel ladite partie (2) de véhicule doit être fixée.

4. Agencement de couvercle selon l'une quelconque des revendications précédentes, **caractérisé en ce que** ladite partie (2) de véhicule à l'avant ou à l'arrière du véhicule est un pare-chocs (1) de véhicule.

5. Agencement de couvercle selon l'une quelconque des revendications précédentes, **caractérisé en ce que** ledit couvercle (11) et ladite partie (2) de véhicule sont munis de moyens de retenue coopérants (14, 21) qui servent à retenir de manière libérable le couvercle dans la première position.

6. Agencement de couvercle selon l'une quelconque des revendications précédentes, **caractérisé en ce que** le moyen de guidage est formé par l'un desdits couvercle (11) et partie (2) de véhicule comportant un axe de pivotement (12), et l'autre desdits couvercle (11) et partie (2) de véhicule comportant un élément de support (9) qui peut coopérer avec l'axe de pivotement (12) pour permettre un mouvement de guidage pivotant.

7. Agencement de couvercle selon la revendication 6, **caractérisé en ce que** l'élément de support (9) est ouvert d'un côté sous forme d'une fente pour permettre le retrait de l'axe de pivotement (12) de la fente dans une direction globalement perpendiculaire à l'axe de l'axe de pivotement.

8. Agencement de couvercle selon la revendication 6 ou 7, **caractérisé en ce que** le couvercle (11) et la partie (2) de véhicule comportent un moyen (11a) qui permet le retrait de l'axe de pivotement uniquement lorsque le couvercle et l'élément de protection se trouvent dans une position angulaire déterminée au préalable.

9. Agencement de couvercle selon l'une quelconque des revendications précédentes, **caractérisé en ce que** le couvercle (11) est attaché à la partie (2) de véhicule par un moyen qui empêche la perte dudit couvercle quand ledit couvercle est retiré dudit moyen de guidage.

10. Agencement de couvercle selon l'une quelconque des revendications précédentes, **caractérisé en ce que** l'un desdits couvercle (11) et partie (2) de véhicule comprend des moyens (13, 13') qui empêchent le couvercle (11) de s'éloigner davantage de la première position lorsque le couvercle (11) est dans la seconde position.

11. Agencement de couvercle selon l'une quelconque des revendications précédentes, **caractérisé en ce que** des moyens libérables (15) sont prévus pour retenir de manière libérable le couvercle (11) en connexion avec la partie (2) de véhicule, lesdits moyens libérables comportant un élément élastique pour maintenir en place le couvercle (11), et une force déterminée au préalable devant être exercée contre ladite élasticité pour retirer le couvercle (11).
